# EUROPEAN PATENT APPLICATION

(11) **EP 2 815 826 A2**
(43) Date of publication of application: **24.12.2014**
(21) Application number: 14162620.0
(22) Date of filing: 31.03.2014
(51) Int. Cl.: B23B 31/02, B23B 29/04, B23B 27/10, B23B 27/22, B25G 3/10

(54) **Tool chuck with a fluid cooling system**

(30) Priority: 29.05.2013 PL 40414213
(71) Applicant: bomar s.a., 41400 Myslowice (PL)
(72) Inventor: Niemczyk, Piotr, 43-230 Gocza kowice Zdrój (PL); Niemczyk, Pawe, 43-600 Jaworzno (PL); Bernisz, Krzysztof, 43-600 Sosnowiec (PL)
(74) Representative: Korga, Leokadia

(57) **Abstract**

The subject of the invention is a tool chuck for clamping haft turning tools with fluid cooling system. According to the invention the characteristic feature of the tool chuck for clamping haft turning tools consisting of a body with a port [hole] and a taper adapter is that in the body 1 with at least one coolant feeder 4 there is a taper adapter 2 assembled with a groove 5 for delivering the coolant to the rear of the taper adapter 2 and to the central inlet in the tool while the body 1 is closed with a plug 3.

## Description

The subject of the invention is a tool chuck for clamping haft turning tools with fluid cooling system.

The Japanese patent description JP2003080408 (A) portrays fluid cooling of the spindle in the machining centre. It is a very useful solution for machining large objects.
According to popular and often used solutions cooling fluid is delivered directly to the cutting edge in order to deprive the element of the cutting heat.

The basic aim of this invention is a precise control of the coolant stream delivered to the chip of a very high temperature and receiving a segmental chip. According to the invention the characteristic feature of the tool chuck for clamping haft turning tools consisting of a body with a port [hole] and a taper adapter is that in the body with at least one coolant feeder there is a taper adapter assembled with a groove for delivering the coolant to the rear of the taper adapter and to the central inlet in the tool while the body is closed with a plug.
The advantageous feature of the plug is that it is sealed with an o-ring.
The advantageous feature of the body is that there are two channels made symmetrically on the both sides of the body.

The basic advantage of the invention is machining efficiency improvement. The invention enables to increase machine cutting parameters and consequently to shorten the working times - productivity improvement.

Furthermore, the solution enables to control the generation, breaking and the flow of the chip.
Increasing the working time of the tool with the tool temperature control is an extremely significant advantage.

The subject of the invention is presented as an exemplary model in the following:

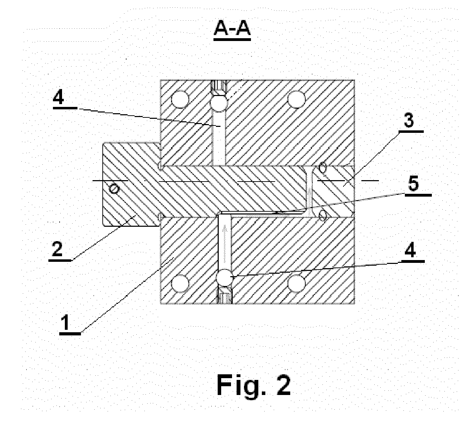

Fig. 1 presents the side view of the tool chuck
Fig. 2 presents the cross section A-A of the tool chuck from the Fig. 1

The following example of the device production does not limit the tool chuck application possibilities.

### The example of the device production

The tool chuck for clamping haft turning tools consists of the body 1 taper adapter 2 and the plug 3. In the body there are two channels 4 delivering the coolant made symmetrically on the both sides of the body 1. In the body 1 there is a taper adapter 2 assembled with a groove 5 made for delivering the coolant to the rear of the taper adapter 2 and to the central inlet in the tool. The body 1 is closed with a plug 3 which is sealed with an o-ring.

## Claims

1. The tool chuck for clamping haft turning tools consisting of a body with a port [hole] and a taper adapter, **wherein** within the body 1 with at least one coolant feeder 4 there is a taper adapter 2 assembled with a groove 5 for delivering the coolant to the rear of the taper adapter 2 and to the central inlet in the tool while the body 1 is closed with a plug 3.

2. The tool chuck for clamping haft turning tools consisting of a body with a port [hole] and a taper adapter, according to the claim no. 1 **characteristic by** the fact that the plug 3 is sealed with an o-ring.

3. The tool chuck for clamping haft turning tools consisting of a body with a port [hole] and a taper adapter, according to the claim no. 1 **characteristic by** the fact that in the body 1 there are two channels 4 made symmetrically on the both sides of the body 1.
